# EUROPÄISCHE PATENTSCHRIFT

(11) **EP 3 562 720 B1**
(45) Veröffentlichungstag und Bekanntmachung des Hinweises auf die Patenterteilung: **11.05.2022**
(21) Anmeldenummer: 17807857.2
(22) Anmeldetag: 30.11.2017
(51) Int. Cl.: B60T 13/74

(54) **STEUERVORRICHTUNG UND VERFAHREN ZUM BETREIBEN EINES ELEKTROMECHANISCHEN BREMSKRAFTVERSTÄRKERS EINES BREMSSYSTEMS EINES FAHRZEUGS**
CONTROL DEVICE AND METHOD FOR OPERATING AN ELECTROMECHANICAL BRAKE BOOSTER OF A BRAKE SYSTEM OF A VEHICLE
DISPOSITIF DE COMMANDE ET PROCÉDÉ PERMETTANT DE FAIRE FONCTIONNER UN SERVOFREIN ÉLECTROMÉCANIQUE D'UN SYSTÈME DE FREINAGE D'UN VÉHICULE

(30) Priorität: 29.12.2016 DE 102016226325
(43) Veröffentlichungstag der Anmeldung: 06.11.2019
(73) Patentinhaber: Robert Bosch GmbH, 70442 Stuttgart (DE)
(72) Erfinder: VOLLERT, Herbert, 71665 Vaihingen/Enz (DE); BINDER, Christian, 74535 Mainhardt (DE); SCHAEFER, Patrick Christian, 71638 Ludwigsburg (DE); GERDES, Manfred, 71665 Vaihingen/Enz (DE); FUCHS, Oliver, 74360 Ilsfeld (DE)
(86) Internationale Anmeldenummer: PCT/EP2017/080972
(87) Internationale Veröffentlichungsnummer: WO 2018/121952

(56) Entgegenhaltungen:
- WO-A1-2011/154369
- WO-A1-2015/185241
- DE-A1- 3 819 490
- DE-A1-102013 214 212
- DE-A1-102014 213 913

## Beschreibung

Die Erfindung betrifft eine Steuervorrichtung für zumindest einen elektromechanischen Bremskraftverstärker eines Bremssystems eines Fahrzeugs. Ebenso betrifft die Erfindung einen elektromechanischen Bremskraftverstärker für ein Bremssystem eines Fahrzeugs und ein Bremssystem für ein Fahrzeug. Des Weiteren betrifft die Erfindung ein Verfahren zum Betreiben eines elektromechanischen Bremskraftverstärkers eines Bremssystems eines Fahrzeugs.

### Stand der Technik

Aus dem Stand der Technik sind elektromechanische Bremskraftverstärker, wie beispielsweise ein in der DE 20 2010 017 605 U1 offenbarter elektromechanischer Bremskraftverstärker, bekannt, welche jeweils einem Hauptbremszylinder eines Bremssystems eines Fahrzeugs vorlagerbar/vorgelagert sind. Mittels eines Betriebs eines Motors des jeweiligen elektromechanischen Bremskraftverstärkers soll mindestens ein verstellbarer Kolben des Hauptbremszylinders derart in den Hauptbremszylinder hineinverstellbar sein, dass ein Hauptbremszylinderdruck in dem Hauptbremszylinder gesteigert wird.

Die DE 10 2014 213 913 A1 beschreibt ein Verfahren und eine Vorrichtung zur elektromechanischen Bremsunterstützung. Bei einem Ausführen des Verfahrens wird unter Berücksichtigung zumindest eines Bremsvorgabesignals bezüglich eines Bremswunsches eines Fahrers des Fahrzeugs eine Soll-Motorkraft eines Motors eines elektromechanischen Bremskraftverstärkers entsprechend festgelegt, und anschließend unter Berücksichtigung einer Kraftdifferenz zwischen der festgelegten Soll-Motorkraft und einer geschätzten oder gemessenen Ist-Motorkraft des Motors eine Soll-Drehgeschwindigkeit des Motors festgelegt. Unter Berücksichtigung der festgelegten Soll-Drehgeschwindigkeit wird dann mindestens ein Steuersignal an den Motor des elektromechanischen Bremskraftverstärkers ausgegeben.

Weitere Beispiele zur elektromechanischen Bremsunterstützung sind in der WO 2011/154369 A1, der DE 10 2013 214 212 A1, der WO 2015/185241 A1 und der DE 38 19 490 A1 beschrieben.

### Offenbarung der Erfindung

Die Erfindung schafft eine Steuervorrichtung für zumindest einen elektromechanischen Bremskraftverstärker eines Bremssystems eines Fahrzeugs mit den Merkmalen des Anspruchs 1, einen elektromechanischen Bremskraftverstärker für ein Bremssystem eines Fahrzeugs mit den Merkmalen des Anspruchs 4, ein Bremssystem für ein Fahrzeug mit den Merkmalen des Anspruchs 5 und ein Verfahren zum Betreiben eines elektromechanischen Bremskraftverstärkers eines Bremssystems eines Fahrzeugs mit den Merkmalen des Anspruchs 6.

### Vorteile der Erfindung

Mittels einer Steuerung eines elektromechanischen Bremskraftverstärkers unter Berücksichtigung einer Kraftdifferenz zwischen einer festgelegten Soll-Motorkraft eines Motors des elektromechanischen Bremskraftverstärkers und einer geschätzten oder gemessenen Ist-Motorkraft des Motors des elektromechanischen Bremskraftverstärkers (bzw. zwischen einer festgelegten Soll-Einbremskraft des elektromechanischen Bremskraftverstärkers in einen nachgeordneten Hauptbremszylinder und einer geschätzten oder gemessenen Ist-Einbremskraft des elektromechanischen Bremskraftverstärkers in den Hauptbremszylinder) ermöglicht die vorliegende Erfindung eine Steuerung des jeweiligen elektromechanischen Bremskraftverstärkers unter "indirekter Mitberücksichtigung" einer Last, welche der elektromechanische Bremskraftverstärker während seines Einsatzes in dem jeweils damit ausgestatteten Bremssystem spürt. Die vorliegende Erfindung nutzt dazu aus, dass die Ist-Motorkraft des Motors des elektromechanischen Bremskraftverstärkers (bzw. die Ist-Einbremskraft des elektromechanischen Bremskraftverstärkers in dem nachgeordneten Hauptbremszylinder) abhängig von einer aktuellen Last ist.

Die vorliegende Erfindung schafft auch vorteilhafte Möglichkeiten zum Einsetzen des elektromechanischen Bremskraftverstärkers zur Steigerung eines Drucks in dem nachgeordneten Hauptbremszylinder (und mindestens einem an dem Hauptbremszylinder angebundenen Radbremszylinder), wobei gleichzeitig der elektromechanische Bremskraftverstärker als "Sensorik" zum Ermitteln der dem elektromechanischen Bremskraftverstärker entgegenwirkenden Last/Laständerung nutzbar ist. Wird mittels der vorliegenden Erfindung eine Last/Laständerung erkannt, so kann mittels des erfindungsgemäßen Betriebs des elektromechanischen Bremskraftverstärkers außerdem verhindert werden, dass eine zu hohe Drehgeschwindigkeit des Motors des elektromechanischen Bremskraftverstärkers zum Auftreten eines unerwünscht hohen Drucks oder Druckspitzen in dem Hauptbremszylinder führt. Entsprechend ist bei einer Nutzung der vorliegenden Erfindung in einem Bremssystem sichergestellt, dass kein unerwünschter Druck oder Druckspitzen in einer anderen an dem jeweiligen Hauptbremszylinder angebundenen Bremssystemkomponente auftritt. Die vorliegende Erfindung trägt somit zur Reduzierung eines Beschädigungsrisikos an Bremssystemkomponenten des jeweils verwendeten Bremssystems bei. Die vorliegende Erfindung trägt auch zur Vermeidung von mechanischen Belastungen auf den elektromechanischen Bremskraftverstärker bei, wodurch eine Lebensdauer des elektromechanischen Bremskraftverstärkers gesteigert wird.

Beispielsweise kann mittels des erfindungsgemäßen Einsatzes des elektromechanischen Bremskraftverstärker als "Sensorik" schnell eine Situation erkannt werden, in welcher eine hydraulische Steifigkeit des jeweiligen Bremssystems zunimmt, wie dies beispielsweise bei einem Schließen von Radeinlassventilen des jeweiligen Bremssystems während einer Antiblockierregelung (ABS-Regelung, bzw. ESP-Regelung) auftritt. Während eine Übertragung eines Signals bezüglich des Schließens der Radeinlassventile an eine herkömmliche Steuerelektronik des elektromechanischen Bremskraftverstärkers in der Regel mindestens 30 ms (Millisekunden) benötigt, kann mittels der vorliegenden Erfindung die Laständerung viel schneller erkannt und entsprechend frühzeitiger darauf reagiert werden. Vor allem während einer Antiblockierregelung wird mittels mindestens einer Pumpe/Rückförderpumpe des Bremssystems vergleichsweise viel Bremsflüssigkeit in dem Hauptbremszylinder gepumpt. Zusätzlich erfolgt ein Schließen von Radeinlassventilen des jeweiligen Bremssystems. Mittels der vorliegenden Erfindung kann jedoch durch den Einsatz des elektromechanischen Bremskraftverstärker als "Sensorik" schnell auf ein möglicherweise vorliegendes Risiko eines unerwünscht hohen Drucks in dem Hauptbremszylinder reagiert werden. Die vorliegende Erfindung trägt somit zur Reduzierung eines Beschädigungsrisikos auch während der Antiblockierregelung bei. Der herkömmliche Nachteil des elektromechanischen Bremskraftverstärkers, dass dieser in der Regel nicht elastisch reagiert und aufgrund seiner hohen Getriebeübersetzung und seiner hohen Getriebereibung ein hohes Haltevermögen aufweist, kann somit behoben werden. Eine Schädigung des Bremssystems ist damit selbst nach einem mehrmaligen Ausführen von Antiblockierregelungen nicht zu befürchten. Eine Ausstattung des Bremssystems mit der im Weiteren beschriebenen Steuervorrichtung finanziert sich somit leicht mittels eingesparter Reparaturkosten.

Außerdem ist die Elektronikeinrichtung dazu ausgelegt, unter Berücksichtigung der Kraftdifferenz eine Soll-Drehgeschwindigkeit des Motors des elektromechanischen Bremskraftverstärkers festzulegen, und unter Berücksichtigung der festgelegten Soll-Drehgeschwindigkeit das mindestens eine Steuersignal an den Motor des elektromechanischen Bremskraftverstärkers auszugeben. Ein mittels einer Vorgabe der Soll-Drehgeschwindigkeit des Motors gesteuerter Betrieb des elektromechanischen Bremskraftverstärkers ist somit verlässlich an eine in dem jeweiligen Bremssystem auftretende Laständerung anpassbar.

Zusätzlich ist die Elektronikeinrichtung dazu ausgelegt, unter Berücksichtigung der Kraftdifferenz die Soll-Drehgeschwindigkeit des Motors des elektromechanischen Bremskraftverstärkers derart festzulegen, dass ein Betrag der festgelegten Soll-Drehgeschwindigkeit immer größer oder gleich einem vorgegebenen Mindestdrehgeschwindigkeitsbetrag ungleich Null ist. Die Steuervorrichtung berücksichtigt damit, dass eine korrekte Lastschätzung/Laständerungsschätzung in der Regel nur erfolgen kann, wenn sich der Motor des elektromechanischen Bremskraftverstärkers dreht. Eine Ansteuerung des elektromechanischen Bremskraftverstärkers durch Vorgabe des Betrags der Soll-Drehgeschwindigkeit von mindestens dem vorgegebenen Mindest-Drehgeschwindigkeitsbetrag erlaubt deshalb eine ununterbrochene Nutzung des elektromechanischen Bremskraftverstärkers als "Sensorik".

Beispielsweise kann die Elektronikeinrichtung dazu ausgelegt sein, sofern ein Betrag der Kraftdifferenz kleiner als ein vorgegebener Vergleichswert ungleich Null ist, den Betrag der Soll-Drehgeschwindigkeit gleich dem vorgegebenen Mindestdrehgeschwindigkeitsbetrag festzulegen, und, sofern der Betrag der Kraftdifferenz größer als der vorgegebene Vergleichswert ist, den Betrag der Soll-Drehgeschwindigkeit als Funktion von der Kraftdifferenz festzulegen. Die Elektronikeinrichtung kann somit vergleichsweise kostengünstig und mit einem relativ geringen Bauraumbedarf ausgebildet werden.

In einer weiteren vorteilhaften Ausführungsform der Steuervorrichtung ist die Elektronikeinrichtung dazu ausgelegt, die Ist-Motorkraft des Motors des elektromechanischen Bremskraftverstärkers oder die Ist-Einbremskraft des elektromechanischen Bremskraftverstärkers in den nachgeordneten Hauptbremszylinder unter Berücksichtigung zumindest einer aktuellen Stromstärke eines Motorstroms des Motors des elektromechanischen Bremskraftverstärkers und eines aktuellen Drehwinkels eines Rotors des Motors des elektromechanischen Bremskraftverstärkers zu schätzen. Wie unten genauer erläutert wird, erlaubt diese Ausführungsform der Steuervorrichtung eine verlässliche Schätzung der Ist-Einbremskraft unter "indirekter Mitberücksichtigung" einer aktuellen Last und/oder einer aktuellen Laständerung.

Die vorausgehend beschriebenen Vorteile sind auch bei einem elektromechanischen Bremskraftverstärker für ein Bremssystem eines Fahrzeugs mit einer derartigen Steuervorrichtung gewährleistet.

Auch ein Bremssystem für ein Fahrzeug mit einer entsprechenden Steuervorrichtung, dem mittels des mindestens einen Steuersignals der Steuervorrichtung ansteuerbaren elektromechanischen Bremskraftverstärker und dem Hauptbremszylinder, welcher dem elektromechanischen Bremskraftverstärker nachgeordnet ist, realisiert die oben beschriebenen Vorteile.

Des Weiteren schafft auch ein Ausführen eines korrespondierenden Verfahrens zum Betreiben eines elektromechanischen Bremskraftverstärkers eines Bremssystems eines Fahrzeugs die oben beschriebenen Vorteile. Es wird ausdrücklich darauf hingewiesen, dass das Verfahren zum Betreiben eines elektromechanischen Bremskraftverstärkers eines Bremssystems eines Fahrzeugs gemäß den oben beschriebenen Ausführungsformen der Steuervorrichtung weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1a bis 1d: Flussdiagramme und ein Koordinatensystem zum Erläutern einer Ausführungsform des Verfahrens zum Betreiben eines elektromechanischen Bremskraftverstärkers eines Bremssystems eines Fahrzeugs; und

- Fig. 2: eine schematische Darstellung einer Ausführungsform der Steuervorrichtung für zumindest einen elektromechanischen Bremskraftverstärker eines Bremssystems eines Fahrzeugs.

Ausführungsformen der Erfindung

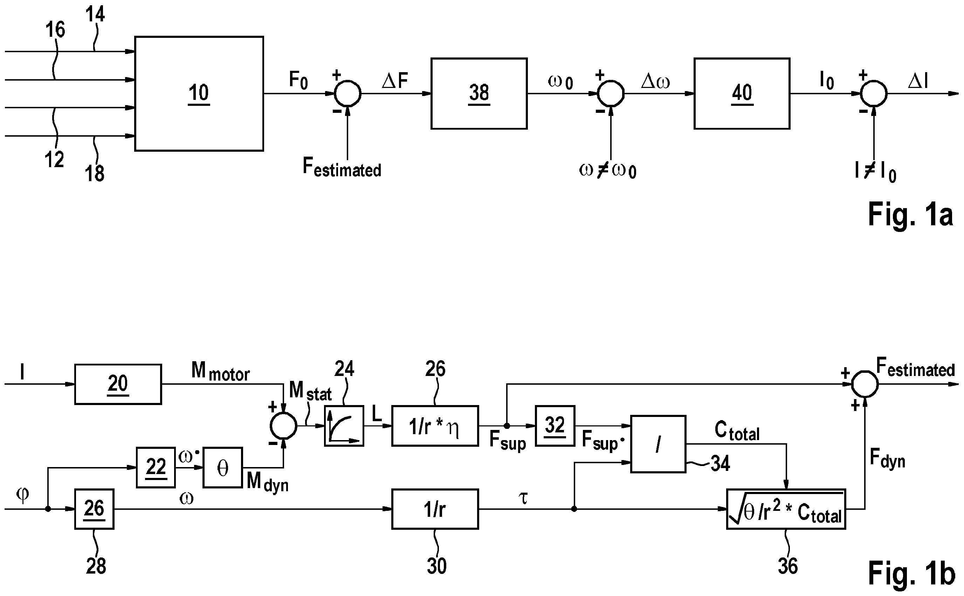

Fig. 1a bis 1d zeigen Flussdiagramme und ein Koordinatensystem zum Erläutern einer ersten Ausführungsform des Verfahrens zum Betreiben eines elektromechanischen Bremskraftverstärkers eines Bremssystems eines Fahrzeugs.

Eine Ausführbarkeit des im Weiteren beschriebenen Verfahrens ist weder auf einen bestimmten Bremssystemtyp des mit dem elektromechanischen Bremskraftverstärker ausgestatteten Bremssystems noch auf einen bestimmten Fahrzeugtyp/Kraftfahrzeugtyp des mit dem Bremssystem bestückten Fahrzeugs/Kraftfahrzeugs beschränkt. Unter dem elektromechanischen Bremskraftverstärker wird ein mit einem (elektrischen) Motor ausgestatteter Bremskraftverstärker verstanden. Außerdem ist der elektromechanische Bremskraftverstärker einem Hauptbremszylinder des Bremssystems so vorgelagert, dass mittels eines Betriebs des Motors des elektromechanischen Bremskraftverstärkers mindestens ein verstellbarer Kolben des Hauptbremszylinders in den Hauptbremszylinder verstellbar ist/verstellt wird.

Bei dem im Weiteren beschriebenen Verfahren wird in einem mittels eines Blocks 10 der Fig. 1a schematisch dargestellten Verfahrensschritt eine Soll-Einbremskraft F₀ des elektromechanischen Bremskraftverstärkers in den ihm nachgeordneten Hauptbremszylinder festgelegt. (Alternativ kann auch eine Soll-Motorkraft des Motors des elektromechanischen Bremskraftverstärkers festgelegt werden.) Das Festlegen der Soll-Einbremskraft F₀ (oder der Soll-Motorkraft) des elektromechanischen Bremskraftverstärker in den Hauptbremszylinder erfolgt unter Berücksichtigung zumindest eines Bremsvorgabesignals 12 bezüglich eines Bremswunsches eines Fahrers des Fahrzeugs und/oder einer Geschwindigkeitssteuerautomatik des Fahrzeugs (z.B. einer ACC-Automatik). Beispielsweise kann der Fahrer des Fahrzeugs mittels einer Betätigung seines Bremsbetätigungselements/Bremspedals eine Soll-Fahrzeugverzögerung vorgeben, was eine Festlegung der Soll-Einbremskraft F₀ (oder der Soll-Motorkraft) zur kraftmäßigen Unterstützung des Fahrers durch den elektromechanischen Bremskraftverstärker beim Bewirken der Soll-Fahrzeugverzögerung auslöst. (Das Bremsvorgabesignal 12 ist in diesem Fall ein Signal eines an dem Bremsbetätigungselement/Bremspedal angeordneten Sensors.) Sofern die Geschwindigkeitssteuerautomatik des Fahrzeugs mittels des Bremsvorgabesignals 12 eine Soll-Fahrzeugverzögerung und/oder eine Soll-Geschwindigkeit des Fahrzeugs anfordert, kann die Soll-Einbremskraft F₀ (oder der Soll-Motorkraft) auch so festlegbar sein, dass die Soll-Fahrzeugverzögerung und/oder die Soll-Geschwindigkeit des Fahrzeugs ausschließlich mittels des elektromechanischen Bremskraftverstärkers bewirkbar sind.

Als Ergänzung zu dem Bremsvorgabesignal 12 kommen noch weitere Signale 14 bis 18, wie beispielsweise ein ABS-Flag-Signal 14, ein Hauptbremszylinder-Drucksignal 16 bezüglich eines in dem Hauptbremszylinder vorliegenden Hauptbremszylinderdrucks und/oder ein Bremsdrucksignal 18 bezüglich eines in mindestens einem Radbremszylinder des Bremssystems vorliegenden Bremsdrucks, bei der Festlegung der Soll-Einbremskraft F₀ (oder der Soll-Motorkraft) mitberücksichtigt werden. Für ein Ansteuern des Motors des elektromechanischen Bremskraftverstärkers unter Berücksichtigung zumindest des Bremsvorgabesignals 12 wird die festgelegte Soll-Einbremskraft F₀ (oder der Soll-Motorkraft) beim Ansteuern des Motors des elektromechanischen Bremskraftverstärkers mitberücksichtigt. Vor allem erfolgt das Ansteuern des Motors des elektromechanischen Bremskraftverstärkers unter Berücksichtigung einer Kraftdifferenz ΔF zwischen der festgelegten Soll-Einbremskraft F₀ und einer geschätzten oder gemessenen Ist-Einbremskraft F_{estimated} des elektromechanischen Bremskraftverstärkers in den nachgeordneten Hauptbremszylinder (bzw. zwischen der festgelegten Soll-Motorkraft des Motors des elektromechanischen Bremskraftverstärkers und einer geschätzten oder gemessenen Ist-Motorkraft des Motors des elektromechanischen Bremskraftverstärkers).

Bei der hier beschriebenen Ausführungsform des Verfahrens wird die Ist-Einbremskraft F_{estimated} des elektromechanischen Bremskraftverstärkers in den nachgeordneten Hauptbremszylinder unter Berücksichtigung zumindest einer aktuellen Stromstärke I eines Motorstroms des Motors des elektromechanischen Bremskraftverstärkers und eines aktuellen Drehwinkels ϕ eines Rotors des Motors des elektromechanischen Bremskraftverstärkers geschätzt. Damit können zum Schätzen der Ist-Einbremskraft F_{estimated} des elektromechanischen Bremskraftverstärkers in den nachgeordneten Hauptbremszylinder Werte verwendet werden, welche leicht schätzbar oder messbar sind. (Der aktuelle Drehwinkel ϕ des Rotors des Motors kann beispielsweise mittels eines Rotorlagesignals ermittelt/geschätzt werden.) Die aktuelle Stromstärke I des Motorstroms und der aktuelle Drehwinkel ϕ des Rotors des Motors des elektromechanischen Bremskraftverstärkers sind außerdem Werte/Signale mit einer sehr hohen Dynamik. Damit eignet sich die im Weiteren beschriebene Vorgehensweise vorteilhaft zum frühzeitigen Reagieren auf eine Änderung einer hydraulischen Steifigkeit des mit dem elektromechanischen Bremskraftverstärker zusammenwirkenden Bremssystems.

In Fig. 1b sind die Teilschritte zum Schätzen der Ist-Einbremskraft F_{estimated} des elektromechanischen Bremskraftverstärkers in den nachgeordneten Hauptbremszylinder schematisch dargestellt: Dazu wird ein Motormoment Mₘₒₜₒᵣ des Motors des elektromechanischen Bremskraftverstärkers unter Berücksichtigung zumindest der aktuellen Stromstärke I des Motorstroms des Motors festgelegt. Zum Herleiten des Motormoments Mₘₒₜₒᵣ des Motors des elektromechanischen Bremskraftverstärkers aus der aktuellen Stromstärke I des Motorstroms des Motors werden in einem Block 20 hinterlegte motorspezifische Daten berücksichtigt. Das Motormoment Mₘₒₜₒᵣ des Motors des elektromechanischen Bremskraftverstärkers bewirkt zu einem dynamischen Anteil M_{dyn} eine "Dynamik des Motors" und zu einem statischen Anteil Mₛₜₐₜ eine "Überwindung" eines Lastmoments/Gegenmoments L, welches das Bremssystem dem Motor des elektromechanischen Bremskraftverstärkers entgegensetzt. Der dynamische Anteil M_{dyn} kann als Produkt aus einer Drehbeschleunigung ω• des Rotors des Motors des elektromechanischen Bremskraftverstärkers und einer Trägheit θ des Motors des elektromechanischen Bremskraftverstärkers berechnet werden. Die Drehbeschleunigung ω• des Rotors des Motors des elektromechanischen Bremskraftverstärkers kann leicht unter Berücksichtigung zumindest des aktuellen Drehwinkels ϕ des Rotors des Motors festgelegt werden. Beispielsweise ergibt sich die Drehbeschleunigung ω• des Rotors des Motors aus einer in einem Block 22 ausgeführten zweifachen zeitlichen Ableitung des aktuellen Drehwinkels ϕ des Rotors des Motors. Der statische Anteil Mₛₜₐₜ des Motormoments Mₘₒₜₒᵣ des Motors des elektromechanischen Bremskraftverstärkers ergibt sich damit aus einer Differenz zwischen dem Motormoment Mₘₒₜₒᵣ und dem dynamischen Anteil M_{dyn} des Motormoments Mₘₒₜₒᵣ. Anschließend kann das dem Motor des elektromechanischen Bremskraftverstärkers entgegenwirkende Lastmoment L unter Berücksichtigung des statischen Anteils Mₛₜₐₜ des Motormoments Mₘₒₜₒᵣ des Motors des elektromechanischen Bremskraftverstärkers geschätzt werden. Beispielsweise kann der statische Anteil Mₛₜₐₜ unter Verwendung eines in einem Block 24 hinterlegten Filters und/oder einer (entsprechend hinterlegten) Kennlinie in das dem Motor des elektromechanischen Bremskraftverstärkers entgegenwirkende Lastmoment L umgewandelt werden.

Unter Berücksichtigung des Lastmoments L wird eine mittels des Motors des elektromechanischen Bremskraftverstärkers ausgeübte Ist-Motorkraft/Unterstützungskraft Fₛᵤₚ festgelegt. Beispielsweise sind in einem Block 26 die Getriebegröße/ Getriebeübersetzung r des Getriebes des elektromechanischen Bremskraftverstärkers und ein Wirkungsgrad η des elektromechanischen Bremskraftverstärkers hinterlegt. Mittels dieser Größen kann eine mittels des Motors des elektromechanischen Bremskraftverstärkers ausgeübte Ist-Motorkraft/Unterstützungskraft Fₛᵤₚ aus dem Lastmoment L hergeleitet werden. (Alternativ kann das Schätzverfahren hier abgebrochen werden und die geschätzte Ist-Motorkraft/Unterstützungskraft Fₛᵤₚ kann zum Festlegen einer Kraftdifferenz zwischen der festgelegten Soll-Motorkraft und der geschätzten Ist-Motorkraft/Unterstützungskraft Fₛᵤₚ verwendet werden.)

Ein Verstellweg/eine Translation ┬ eines Kolbens des elektromechanischen Bremskraftverstärkers kann unter Berücksichtigung zumindest des aktuellen Drehwinkels ϕ des Rotors des Motors festgelegt werden. Z.B. ergibt sich mittels einer in einem Block 28 ausgeführten zeitlichen Ableitung aus dem aktuellen Drehwinkel ϕ des Rotors des Motors des elektromechanischen Bremskraftverstärkers eine Drehgeschwindigkeit ω des Rotors des Motors. In einem Block 30 ist eine Getriebegröße/Getriebeübersetzung r eines Getriebes des elektromechanischen Bremskraftverstärkers hinterlegt, mittels welcher die Drehgeschwindigkeit ω des Rotors des Motors in den Verstellweg/die Translation ┬ des dem Getriebe nachgeordneten Kolbens des elektromechanischen Bremskraftverstärkers umgerechnet wird. Der dem Getriebe nachgeordnete Kolben kann z.B. ein Ventilkörper (Valve Body) oder ein Verstärkerkörper (Boost Body) des elektromechanischen Bremskraftverstärkers sein.

In einem Block 32 wird außerdem eine zeitliche Ableitung/ein Gradient Fsup• der mittels des Motors des elektromechanischen Bremskraftverstärkers ausgeübten Ist-Motorkraft/Unterstützungskraft Fₛᵤₚ ermittelt. In einem weiteren Block 34 wird ein Quotient Cₜₒₜₐₗ aus der zeitlichen Ableitung/dem Gradienten Fsup• geteilt durch den Verstellweg/die Translation ┬ des Kolbens des elektromechanischen Bremskraftverstärkers berechnet, welcher die Laständerung Cₜₒₜₐₗ angibt. Die Laständerung Cₜₒₜₐₗ kann auch als eine hydraulische Steifigkeit (Stiffness) des Bremssystems umschrieben werden.

Die Laständerung Cₜₒₜₐₗ wird an einen Block 36 ausgegeben, in welchem die Trägheit θ des Motors des elektromechanischen Bremskraftverstärkers und die Getriebegröße/ Getriebeübersetzung r des Getriebes des elektromechanischen Bremskraftverstärkers hinterlegt sind. Damit kann aus der Laständerung Cₜₒₜₐₗ eine mittels des elektromechanischen Bremskraftverstärkers ausgeübte dynamische Kraft F_{dyn} berechnet werden. Die mittels des elektromechanischen Bremskraftverstärkers zu ausgeübte dynamische Kraft F_{dyn} kann auch als eine "Kraft aus einer kinetischen Energie" des Rotors des Motors des elektromechanischen Bremskraftverstärkers bezeichnet werden.

Aus einer Summe der mittels des elektromechanischen Bremskraftverstärkers ausgeübten Ist-Motorkraft/Unterstützungskraft Fₛᵤₚ und der mittels des elektromechanischen Bremskraftverstärkers ausgeübten dynamischen Kraft F_{dyn} kann die Einbremskraft F_{estimated} des elektromechanischen Bremskraftverstärkers, mit welcher der elektromechanische Bremskraftverstärkers in den Hauptbremszylinder einbremst und den darin vorliegenden Hauptbremszylinderdruck bewirkt/steigert, berechnet werden. Optionaler Weise kann für die Einbremskraft F_{estimated} noch eine (nicht skizzierte) Reibungskorrektur ausgeführt werden.

Die in den vorausgehenden Absätzen beschriebenen Teilschritte bieten eine besonders vorteilhafte und schnell ausführbare Möglichkeit zum verlässlichen Schätzen der Einbremskraft F_{estimated}. Es wird auch darauf hingewiesen, dass die in Fig. 1b dargestellten Teilschritte schneller ausführbar sind, als ein Datentransfer/Signaltransfer eines mittels mindestens eines Drucksensors gemessenen Messwerts über einen Datenbus. Ein Ausführen des hier beschriebenen Verfahrens erlaubt somit ein "Vorhersagen" einer Änderung der hydraulischen Steifigkeit des Bremssystems (gegenüber einem Messen der Änderung der hydraulischen Steifigkeit des Bremssystems). Eine Ausführbarkeit des Verfahrens ist jedoch nicht auf die in den vorausgehenden Absätzen beschriebenen Teilschritte limitiert. Es wird insbesondere darauf hingewiesen, dass die oben beschriebenen Teilschritte auch nach einem Schätzen der Ist-Motorkraft/Unterstützungskraft Fₛᵤₚ abgebrochen werden können. In diesem Fall werden die nachfolgend beschriebenen Verfahrensschritte mittels der festgelegten Soll-Motorkraft und der geschätzten Ist-Motorkraft/Unterstützungskraft Fₛᵤₚ (anstelle der festgelegten Soll-Einbremskraft F₀ und der geschätzten Ist-Einbremskraft F_{estimated}) ausgeführt.

In einem mittels eines Blocks 38 der Fig. 1a wiedergegebenen Verfahrensschritt wird unter Berücksichtigung der Kraftdifferenz ΔF zwischen der festgelegten Soll-Einbremskraft F₀ und der geschätzten (oder gemessenen) Ist-Einbremskraft F_{estimated} (bzw. zwischen der festgelegten Soll-Motorkraft und der geschätzten und gemessenen Ist-Motorkraft) eine Soll-Drehgeschwindigkeit ω₀ des Motors des elektromechanischen Bremskraftverstärkers festgelegt. Außerdem wird dabei unter Berücksichtigung der Kraftdifferenz ΔF zwischen der festgelegten Soll-Einbremskraft F₀ und der geschätzten (oder gemessenen) Ist-Einbremskraft F_{estimated} die Soll-Drehgeschwindigkeit ω₀ des Motors des elektromechanischen Bremskraftverstärkers derart festgelegt, dass ein Betrag der festgelegten Soll-Drehgeschwindigkeit immer größer oder gleich einem vorgegebenen Mindest-Drehgeschwindigkeitsbetrag ωₘᵢₙ ungleich Null festgelegt wird. Diese Vorgehensweise berücksichtigt, dass der Motor des elektromechanischen Bremskraftverstärkers die aktuelle Last und/oder die aktuelle Laständerung nur "spürt", solange sich der Motor (bzw. sein Rotor) dreht. Mittels der Vorgabe des Mindest-Drehgeschwindigkeitsbetrags ωₘᵢₙ (ungleich Null) kann somit eine unterbrechungsfreie Nutzung des Motors des elektromechanischen Bremskraftverstärkers als "Sensorik" zum Ermitteln der aktuellen Last und/oder der aktuellen Laständerung gewährleistet werden.

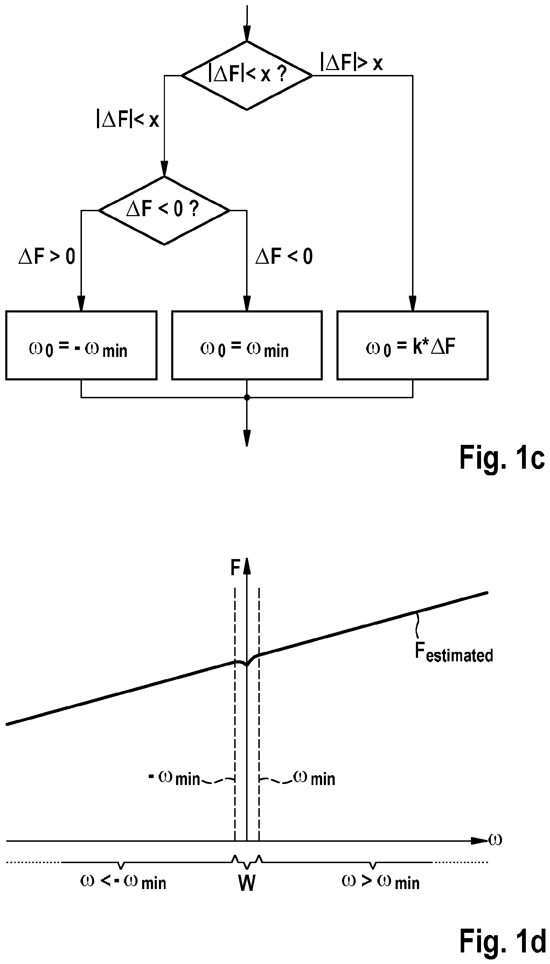

Fig. 1c zeigt eine besonders vorteilhafte Ausführungsform für die in dem Block 38 ausgeführten Verfahrensschritte, bei welcher zuerst ein Betrag der Kraftdifferenz ΔF zwischen der festgelegten Soll-Einbremskraft F₀ und der geschätzten (oder gemessenen) Ist-Einbremskraft F_{estimated} mit einem (fest) vorgegebenen Vergleichswert x ungleich Null verglichen wird. Sofern der Betrag der Kraftdifferenz ΔF kleiner als der vorgegebene Vergleichswert x ist, wird der Betrag der Soll-Drehgeschwindigkeit ω₀ gleich dem vorgegebenen Mindest-Drehgeschwindigkeitsbetrag ωₘᵢₙ festgelegt. (Für eine Kraftdifferenz ΔF < 0 wird die Soll-Drehgeschwindigkeit ω₀ gleich dem positiven Mindest-Drehgeschwindigkeitsbetrag ωₘᵢₙ festgelegt. Ist jedoch die Kraftdifferenz ΔF > 0, so wird die Soll-Drehgeschwindigkeit ω₀ gleich dem negativen Mindest-Drehgeschwindigkeitsbetrag -ωₘᵢₙ festgelegt.) Wird allerdings festgestellt, dass der Betrag der Kraftdifferenz ΔF größer als der vorgegebene Vergleichswert x ist, so wird der Betrag der Soll-Drehgeschwindigkeit ω₀ als Funktion von der Kraftdifferenz ΔF festgelegt. Möglich ist dann z.B. eine Festlegung des Betrags der Soll-Drehgeschwindigkeit ω₀ als lineare Funktion von der Kraftdifferenz ΔF. Beispielsweise wird die Soll-Drehgeschwindigkeit ω₀ gleich einem Produkt der Kraftdifferenz ΔF mit einem vorgegebenen Verstärkungsfaktor k festgelegt. (Prinzipiell kann jedes Regelkonzept eingesetzt werden, lediglich beispielhaft ist hier ein P-Regler wiedergegeben.)

Fig. 1d zeigt den Vorteil der mittels der Fig. 1c schematisch wiedergegebenen Vorgehensweise, wobei eine Abszisse des Koordinatensystems der Fig. 1d eine aktuelle Drehgeschwindigkeit ω eines Rotors des Motors des elektromechanischen Bremskraftverstärkers und eine Ordinate des Koordinatensystems der Fig. 1d eine Kraft F angeben.

Erkennbar ist, dass mittels des in Fig. 1c schematisch dargestellten Verfahrensschritts gewährleistbar ist, dass sich der Motor des elektromechanischen Bremskraftverstärkers entweder in einem angetriebenen Betrieb (ω > ωₘᵢₙ) oder in einem getriebenen Betrieb (ω < -ωₘᵢₙ) befindet.

Unterbunden ist ein Betrieb des Motors des elektromechanischen Bremskraftverstärkers in einem Drehgeschwindigkeit-Wertebereich W von Drehgeschwindigkeiten ω größer als der negativen Mindest-Drehgeschwindigkeitsbetrag -ωₘᵢₙ und kleiner als der positive Mindest-Drehgeschwindigkeitsbetrag -ωₘᵢₙ, in welchem keine verlässliche Nutzung des elektromechanischen Bremskraftverstärkers als "Sensorik" möglich ist.

Der in Fig. 1c schematisch dargestellte Verfahrensschritt führt kaum zu einer Abweichung des mindestens einen Bremsdrucks in dem mindestens einen Radbremszylinder des Bremssystems (von einem gewünschten Soll-Bremsdruck). Insbesondere während einer ABS-Regelung treten signifikante Volumenverschiebungen auf, und es fällt deshalb in der Regel nicht/kaum auf, wenn der Motor des elektromechanischen Bremskraftverstärkers immer mit einer Soll-Drehgeschwindigkeit ω0 ungleich 0 angesteuert wird.

Der Motor des elektromechanischen Bremskraftverstärkers wird nun unter Berücksichtigung der festgelegten Soll-Drehgeschwindigkeit ω0 angesteuert. Sofern eine aktuelle Drehgeschwindigkeit ω des Rotors des Motors des elektromechanischen Bremskraftverstärkers ungleich der mittels des Verfahrensschritts der Fig. 1c festgelegten Soll-Drehgeschwindigkeit ω₀ ist, kann eine Drehgeschwindigkeitsdifferenz Δω zwischen der Soll-Drehgeschwindigkeit ω₀ und der aktuellen Drehgeschwindigkeit ω des Rotors des Motors des elektromechanischen Bremskraftverstärkers kann als Regelgröße festgelegt werden. (Ist die aktuelle Drehgeschwindigkeit ω gleich der festgelegten Soll-Drehgeschwindigkeit ω₀, so wird vorzugsweise der Mindest-Drehgeschwindigkeitsbetrag ωₘᵢₙ als Regelgröße festgelegt.)

Anschließend kann die Drehgeschwindigkeitsdifferenz Δω/der Mindest-Drehgeschwindigkeitsbetrag ωₘᵢₙ in einem Block 40 eine Soll-Stromstärke I₀ eines Soll-Motorstroms des Motors umgewandelt werden. Danach kann aus der Soll-Stromstärke I₀ und einer aktuellen Stromstärke I des Motorstroms des Motors ungleich der Soll-Stromstärke I₀ eine Stromstärkendifferenz ΔI als Stromregelgröße hergeleitet werden. (Sofern die aktuelle Stromstärke I gleich der Soll-Stromstärke I₀ ist, kann auch eine dem Mindest-Drehgeschwindigkeitsbetrag ωₘᵢₙ entsprechende Stromstärke I als Stromregelgröße festgelegt werden.) Die Stromregelgröße wird nun zum weiteren Ansteuern des Motors eingesetzt.

In einer Weiterbildung des hier beschriebenen Verfahrens kann noch ein "Enable"-Signal von Block 10 an Block 38 ausgegebenen werden, welches Block 38 zum Ausführen der oben beschriebenen Verfahrensschritte ansteuert.

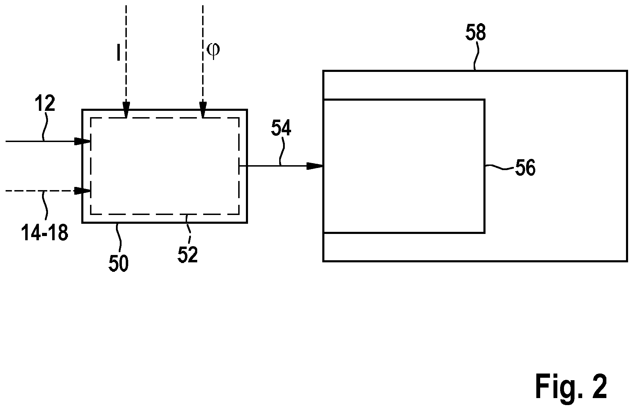

Fig. 2 zeigt eine schematische Darstellung einer Ausführungsform der Steuervorrichtung für zumindest einen elektromechanischen Bremskraftverstärker eines Bremssystems eines Fahrzeugs.

Eine Verwendbarkeit der im Weiteren beschriebenen Steuervorrichtung 50 ist weder auf einen bestimmten Bremssystemtyp des damit ausgestatteten Bremssystems noch auf einen bestimmten Fahrzeugtyp/Kraftfahrzeugtyp des mit dem Bremssystem bestückten Fahrzeugs/Kraftfahrzeugs beschränkt. Die Steuervorrichtung 50 weist eine Elektronikeinrichtung 52 auf, welche dazu ausgelegt ist, unter Berücksichtigung zumindest eines an die Elektronikeinrichtung 52 ausgegebenen Bremsvorgabesignals 12 bezüglich eines Bremswunsches eines Fahrers des Fahrzeugs und/oder einer Geschwindigkeitssteuerautomatik des Fahrzeugs mindestens ein Steuersignal 54 an einen Motor 56 des elektromechanischen Bremskraftverstärkers 58 auszugeben. Außerdem ist die Elektronikeinrichtung 52 dazu ausgelegt, unter Berücksichtigung zumindest des Bremsvorgabesignals 12 eine Soll-Motorkraft des Motors 56 des elektromechanischen Bremskraftverstärkers 58 oder eine Soll-Einbremskraft F₀ des elektromechanischen Bremskraftverstärkers 58 in einen dem elektromechanischen Bremskraftverstärker 58 nachgeordneten (nicht skizzierten) Hauptbremszylinder des Bremssystems festzulegen.

Des Weiteren ist die Elektronikeinrichtung 52 dazu ausgelegt, unter Berücksichtigung einer Kraftdifferenz ΔF zwischen der festgelegten Soll-Motorkraft und einer geschätzten oder gemessenen Ist-Motorkraft Fₛᵤₚ des Motors 56 des elektromechanischen Bremskraftverstärkers 58 oder zwischen der festgelegten Soll-Einbremskraft F₀ und einer geschätzten oder gemessenen Ist-Einbremskraft F_{estimated} des elektromechanischen Bremskraftverstärkers 58 in den nachgeordneten Hauptbremszylinder das mindestens eine Steuersignal 54 an den Motor 56 auszugeben.

Auch ein Betrieb der Steuervorrichtung 50 ermöglicht damit eine sehr hohe Dynamik beim Ansteuern des elektromechanischen Bremskraftverstärkers 58. Unterbremsungen oder Bremssystemüberlastungen können bei dem mit der Steuervorrichtung 50 ausgestatteten/zusammenwirkenden Bremssystem ausgeschlossen werden. Zusätzlich kann die Steuervorrichtung 50 mit einer vergleichsweise einfach aufgebauten und kostengünstigen Elektronikeinrichtung 52 ausgestattet sein. Außerdem benötigt eine zum Ausführen der oben beschriebenen Verfahrensschritte geeignete Elektronikeinrichtung 52 nur relativ wenig Bauraum.

Außerdem ist die Elektronikeinrichtung 52 dazu ausgelegt, unter Berücksichtigung der Kraftdifferenz ΔF eine Soll-Drehgeschwindigkeit ω₀ des Motors 56 des elektromechanischen Bremskraftverstärkers 58 festzulegen, und unter Berücksichtigung der festgelegten Soll-Drehgeschwindigkeit ω₀ das mindestens eine Steuersignal 54 an den Motor 56 des elektromechanischen Bremskraftverstärkers 58 auszugeben. Zusätzlich ist die Elektronikeinrichtung 52 dazu ausgelegt, unter Berücksichtigung der Kraftdifferenz ΔF die Soll-Drehgeschwindigkeit ω₀ des Motors 56 des elektromechanischen Bremskraftverstärkers 58 derart festzulegen, dass ein Betrag der festgelegten Soll-Drehgeschwindigkeit ω₀ immer größer oder gleich einem vorgegebenen Mindestdrehgeschwindigkeitsbetrag ωₘᵢₙ ungleich Null ist. Beispielsweise kann die Elektronikeinrichtung 52 dazu ausgelegt sein, sofern ein Betrag der Kraftdifferenz ΔF kleiner als ein vorgegebener Vergleichswert x ungleich Null ist, den Betrag der Soll-Drehgeschwindigkeit ω₀ gleich dem vorgegebenen Mindestdrehgeschwindigkeitsbetrag ωₘᵢₙ festzulegen, und, sofern der Betrag der Kraftdifferenz ΔF größer als der vorgegebene Vergleichswert x ist, den Betrag der Soll-Drehgeschwindigkeit ω₀ als (z.B. lineare) Funktion von der Kraftdifferenz ΔF festzulegen. Ebenso kann mittels der Elektronikeinrichtung 52 die Ist-Motorkraft Fₛᵤₚ des Motors 56 des elektromechanischen Bremskraftverstärkers 58 oder die Ist-Einbremskraft F_{estimated} des elektromechanischen Bremskraftverstärkers 58 in den nachgeordneten Hauptbremszylinder unter Berücksichtigung zumindest einer aktuellen Stromstärke I eines Motorstroms des Motors 56 des elektromechanischen Bremskraftverstärkers 58 und eines aktuellen Drehwinkels ϕ eines Rotors des Motors 56 des elektromechanischen Bremskraftverstärkers 58 geschätzt werden. Es wird ausdrücklich darauf hingewiesen, dass auch weitere der oben beschriebenen Verfahrensschritte mittels der Elektronikeinrichtung 52 ausführbar sein können.

## Patentansprüche

1. Steuervorrichtung (50) für zumindest einen elektromechanischen Bremskraftverstärker (58) eines Bremssystems eines Fahrzeugs, mit
einer Elektronikeinrichtung (52), welche dazu ausgelegt ist, unter Berücksichtigung zumindest eines an die Elektronikeinrichtung (52) ausgegebenen Bremsvorgabesignals (12) bezüglich eines Bremswunsches eines Fahrers des Fahrzeugs und/oder einer Geschwindigkeitssteuerautomatik des Fahrzeugs mindestens ein Steuersignal (54) an einen Motor (56) des elektromechanischen Bremskraftverstärkers (58) auszugeben;
wobei die Elektronikeinrichtung (52) zusätzlich dazu ausgelegt ist,
unter Berücksichtigung zumindest des Bremsvorgabesignals (12) eine Soll-Motorkraft des Motors (56) des elektromechanischen Bremskraftverstärkers (58) oder eine Soll-Einbremskraft (F₀) des elektromechanischen Bremskraftverstärkers (58) in einen dem elektromechanischen Bremskraftverstärker (58) nachgeordneten Hauptbremszylinder des Bremssystems festzulegen; und
unter Berücksichtigung einer Kraftdifferenz (ΔF) zwischen der festgelegten Soll-Motorkraft und einer geschätzten oder gemessenen Ist-Motorkraft (Fₛᵤₚ) des Motors (56) des elektromechanischen Bremskraftverstärkers (58) oder zwischen der festgelegten Soll-Einbremskraft (F₀) und einer geschätzten oder gemessenen Ist-Einbremskraft (F_{estimated}) des elektromechanischen Bremskraftverstärkers (58) in den nachgeordneten Hauptbremszylinder eine Soll-Drehgeschwindigkeit (ω₀) des Motors (56) des elektromechanischen Bremskraftverstärkers (58) festzulegen, und unter Berücksichtigung der festgelegten Soll-Drehgeschwindigkeit (ω₀) das mindestens eine Steuersignal (54) an den Motor (56) des elektromechanischen Bremskraftverstärkers (58) auszugeben;
**dadurch gekennzeichnet, dass**
die Elektronikeinrichtung (52) zusätzlich dazu ausgelegt ist, unter Berücksichtigung der Kraftdifferenz (ΔF) die Soll-Drehgeschwindigkeit (ω₀) des Motors des elektromechanischen Bremskraftverstärkers derart festzulegen, dass ein Betrag der festgelegten Soll-Drehgeschwindigkeit (ω₀) immer größer oder gleich einem vorgegebenen Mindestdrehgeschwindigkeitsbetrag (ωₘᵢₙ) ungleich Null ist.

2. Steuervorrichtung (50) nach Anspruch 1, wobei die Elektronikeinrichtung (52) dazu ausgelegt ist, sofern ein Betrag der Kraftdifferenz (ΔF) kleiner als ein vorgegebener Vergleichswert (x) ungleich Null ist, den Betrag der Soll-Drehgeschwindigkeit (ω₀) gleich dem vorgegebenen Mindestdrehgeschwindigkeitsbetrag (ωₘᵢₙ) festzulegen, und, sofern der Betrag der Kraftdifferenz (ΔF) größer als der vorgegebene Vergleichswert (x) ist, den Betrag der Soll-Drehgeschwindigkeit (ω₀) als Funktion von der Kraftdifferenz (ΔF) festzulegen.

3. Steuervorrichtung (50) Anspruch 1 oder 2, wobei die Elektronikeinrichtung (52) dazu ausgelegt ist, die Ist-Motorkraft (Fₛᵤₚ) des Motors (56) des elektromechanischen Bremskraftverstärkers (58) oder die Ist-Einbremskraft (F_{esti-mated}) des elektromechanischen Bremskraftverstärkers (58) in den nachgeordneten Hauptbremszylinder unter Berücksichtigung zumindest einer aktuellen Stromstärke (I) eines Motorstroms des Motors (56) des elektromechanischen Bremskraftverstärkers (58) und eines aktuellen Drehwinkels (ϕ) eines Rotors des Motors (56) des elektromechanischen Bremskraftverstärkers (58) zu schätzen.

4. Elektromechanischer Bremskraftverstärker (58) für ein Bremssystem eines Fahrzeugs mit einer Steuervorrichtung (50) nach einem der vorhergehenden Ansprüche.

5. Bremssystem für ein Fahrzeug mit:
einer Steuervorrichtung (50) nach einem der Ansprüche 1 bis 3;
dem mittels des mindestens einen Steuersignals (54) der Steuervorrichtung (50) ansteuerbaren elektromechanischen Bremskraftverstärker (58); und
dem Hauptbremszylinder, welcher dem elektromechanischen Bremskraftverstärker (58) nachgeordnet ist.

6. Verfahren zum Betreiben eines elektromechanischen Bremskraftverstärkers (58) eines Bremssystems eines Fahrzeugs mit den Schritten:
Ansteuern eines Motors (56) des elektromechanischen Bremskraftverstärkers (58) unter Berücksichtigung zumindest eines Bremsvorgabesignals (12) bezüglich eines Bremswunsches eines Fahrers des Fahrzeugs und/oder einer Geschwindigkeitssteuerautomatik des Fahrzeugs mit den Schritten:
Festlegen einer Soll-Motorkraft des Motors (56) des elektromechanischen Bremskraftverstärkers (58) oder einer Soll-Einbremskraft (F₀) des elektromechanischen Bremskraftverstärkers (58) in einen dem elektromechanischen Bremskraftverstärker (58) nachgeordneten Hauptbremszylinder des Bremssystems unter Berücksichtigung zumindest des Bremsvorgabesignals (12); und
Ansteuern des Motors (56) des elektromechanischen Bremskraftverstärkers (58) unter Berücksichtigung einer Kraftdifferenz (ΔF) zwischen der festgelegten Soll-Motorkraft und einer geschätzten oder gemessenen Ist-Motorkraft (Fₛᵤₚ) des Motors (56) oder zwischen der festgelegten Soll-Einbremskraft (F₀) und einer geschätzten oder gemessenen Ist-Einbremskraft (F_{estimated}) des elektromechanischen Bremskraftverstärkers (58) in den nachgeordneten Hauptbremszylinder;
wobei unter Berücksichtigung der Kraftdifferenz (ΔF) eine Soll-Drehgeschwindigkeit (ω₀) des Motors (56) des elektromechanischen Bremskraftverstärkers (58) festgelegt wird, und der Motor (56) des elektromechanischen Bremskraftverstärkers (58) unter Berücksichtigung der festgelegten Soll-Drehgeschwindigkeit (ω₀) angesteuert wird,
**dadurch gekennzeichnet, dass**
unter Berücksichtigung der Kraftdifferenz (ΔF) die Soll-Drehgeschwindigkeit (ω₀) des Motors (56) des elektromechanischen Bremskraftverstärkers (58) derart festgelegt wird, dass ein Betrag der festgelegten Soll-Drehgeschwindigkeit (ω₀) immer größer oder gleich einem vorgegebenen Mindestdrehgeschwindigkeitsbetrag (ωₘᵢₙ) ungleich Null festgelegt wird.

7. Verfahren nach Anspruch 6, wobei, sofern ein Betrag der Kraftdifferenz (ΔF) kleiner ist als ein vorgegebener Vergleichswert (x) ungleich Null, der Betrag der Soll-Drehgeschwindigkeit (ω₀) gleich dem vorgegebenen Mindestdrehgeschwindigkeitsbetrag (ωₘᵢₙ) festgelegt wird, und, sofern der Betrag der Kraftdifferenz (ΔF) größer ist als der vorgegebene Vergleichswert (x), der Betrag der Soll-Drehgeschwindigkeit (ω₀) als Funktion von der Kraftdifferenz (ΔF) festgelegt wird.

8. Verfahren nach Anspruch 6 oder 7, wobei die Ist-Motorkraft (Fₛᵤₚ) des Motors (56) des elektromechanischen Bremskraftverstärkers (58) oder die Ist-Einbremskraft (F_{estimated}) des elektromechanischen Bremskraftverstärkers (58) in den nachgeordneten Hauptbremszylinder unter Berücksichtigung zumindest einer aktuellen Stromstärke (I) eines Motorstroms des Motors (56) des elektromechanischen Bremskraftverstärkers (58) und eines aktuellen Drehwinkels (ϕ) eines Rotors des Motors (56) des elektromechanischen Bremskraftverstärkers (58) geschätzt wird.

## Claims

1. Control device (50) for at least one electromechanical brake force booster (58) of a brake system of a vehicle, having
an electronics device (52) which is configured to output at least one control signal (54) to a motor (56) of the electromechanical brake force booster (58) taking into consideration at least one braking specification signal (12) which is output to the electronics device (52) and which relates to a braking demand from a driver of the vehicle and/or from an automatic speed control system of the vehicle;
wherein the electronics device (52) is additionally configured to
set a setpoint motor force of the motor (56) of the electromechanical brake force booster (58), or a setpoint braking input force (F₀) of the electromechanical brake force booster (58) into a master brake cylinder of the brake system, which master brake cylinder is connected downstream of the electromechanical brake force booster (58), taking into consideration at least the braking specification signal (12); and
set a setpoint rotational speed (ω₀) of the motor (56) of the electromechanical brake force booster (58) taking into consideration a force difference (ΔF) between the set setpoint motor force and an estimated or measured actual motor force (Fₛᵤₚ) of the motor (56) of the electromechanical brake force booster (58) or between the set setpoint braking input force (F₀) and an estimated or measured actual braking input force (F_{estimated}) of the electromechanical brake force booster (58) into the downstream master brake cylinder, and output the at least one control signal (54) to the motor (56) of the electromechanical brake force booster (58) taking into consideration the set setpoint rotational speed (ω₀);
**characterized in that**
the electronics device (52) is additionally configured to set the setpoint rotational speed (ω₀) of the motor of the electromechanical brake force booster taking into consideration the force difference (ΔF) such that a magnitude of the set setpoint rotational speed (ω₀) is always greater than or equal to a predefined non-zero minimum rotational speed magnitude (ωₘᵢₙ) .

2. Control device (50) according to Claim 1, wherein the electronics device (52) is configured to set the magnitude of the setpoint rotational speed (ω₀) equal to the predefined minimum rotational speed magnitude (ωₘᵢₙ) if a magnitude of the force difference (ΔF) is smaller than a predefined non-zero comparison value (x), and to set the magnitude of the setpoint rotational speed (ω₀) as a function of the force difference (ΔF) if the magnitude of the force difference (ΔF) is greater than the predefined comparison value (x).

3. Control device (50) according to Claim 1 or 2, wherein the electronics device (52) is configured to estimate the actual motor force (Fₛᵤₚ) of the motor (56) of the electromechanical brake force booster (58) or the actual braking input force (F_{estimated}) of the electromechanical brake force booster (58) in the downstream master brake cylinder taking into consideration at least a present current intensity (I) of a motor current of the motor (56) of the electromechanical brake force booster (58) and a present rotational angle (ϕ) of a rotor of the motor (56) of the electromechanical brake force booster (58).

4. Electromechanical brake force booster (58) for a brake system of a vehicle, having a control device (50) according to any one of the preceding claims.

5. Brake system for a vehicle, having:
a control device (50) according to any one of Claims 1 to 3;
the electromechanical brake force booster (58), which is actuatable by way of the at least one control signal (54) of the control device (50); and
the master brake cylinder, which is positioned downstream of the electromechanical brake force booster (58).

6. Method for operating an electromechanical brake force booster (58) of a brake system of a vehicle, having the steps:
actuating a motor (56) of the electromechanical brake force booster (58) taking into consideration at least one braking specification signal (12) relating to a braking demand from a driver of the vehicle and/or from an automatic speed control system of the vehicle, having the steps:
setting a setpoint motor force of the motor (56) of the electromechanical brake force booster (58), or a setpoint braking input force (F₀) of the electromechanical brake force booster (58) into a master brake cylinder of the brake system, which master brake cylinder is connected downstream of the electromechanical brake force booster (58), taking into consideration at least the braking specification signal (12); and
actuating the motor (56) of the electromechanical brake force booster (58) taking into consideration a force difference (ΔF) between the set setpoint motor force and an estimated or measured actual motor force (Fₛᵤₚ) of the motor (56) or between the set setpoint braking input force (F₀) and an estimated or measured actual braking input force (F_{estimated}) of the electromechanical brake force booster (58) into the downstream master brake cylinder;
wherein a setpoint rotational speed (ω₀) of the motor (56) of the electromechanical brake force booster (58) is set taking into consideration the force difference (ΔF) , and the motor (56) of the electromechanical brake force booster (58) is actuated taking into consideration the set setpoint rotational speed (ω₀);
**characterized in that**
the setpoint rotational speed (ω₀) of the motor (56) of the electromechanical brake force booster (58) is set taking into consideration the force difference (ΔF) such that a magnitude of the set setpoint rotational speed (ω₀) is always greater than or equal to a predefined non-zero minimum rotational speed magnitude (ωₘᵢₙ) .

7. Method according to Claim 6, wherein the magnitude of the setpoint rotational speed (ω₀) is set equal to the predefined minimum rotational speed magnitude (ωₘᵢₙ) if a magnitude of the force difference (ΔF) is smaller than a predefined non-zero comparison value (x), and the magnitude of the setpoint rotational speed (ω₀) is set as a function of the force difference (ΔF) if the magnitude of the force difference (ΔF) is greater than the predefined comparison value (x).

8. Method according to Claim 6 or 7, wherein the actual motor force (Fₛᵤₚ) of the motor (56) of the electromechanical brake force booster (58) or the actual braking input force (F_{estimated}) of the electromechanical brake force booster (58) in the downstream master brake cylinder is estimated taking into consideration at least a present current intensity (I) of a motor current of the motor (56) of the electromechanical brake force booster (58) and a present rotational angle (ϕ) of a rotor of the motor (56) of the electromechanical brake force booster (58).

## Revendications

1. Dispositif de commande (50) destiné à au moins un servofrein électromécanique (58) d'un système de freinage d'un véhicule, ledit dispositif comprenant un moyen électronique (52) qui est conçu pour délivrer au moins un signal de commande (54) à un moteur (56) du servofrein électromécanique (58) en prenant en compte un signal de spécification de freinage (12) délivré au moyen électronique (52) et relatif à un souhait de freinage de la part d'un conducteur du véhicule et/ou d'un automate de commande de vitesse du véhicule ;
le moyen électronique (52) étant en outre conçu pour prédéterminer, en prenant en compte au moins le signal de spécification de freinage (12), une force motrice cible du moteur (56) du servofrein électromécanique (58) ou une force de freinage cible (F₀) du servofrein électromécanique (58) dans un maître-cylindre de frein, disposé en aval du servofrein électromécanique (58), du système de freinage ; et
prédéterminer, en prenant en compte une différence de force (ΔF) entre la force de moteur cible prédéterminée et une force de moteur réelle estimée ou mesurée (Fₛᵤₚ) du moteur (56) du servofrein électromécanique (58) ou entre la force de freinage cible prédéterminée (F₀) et une force de freinage réelle estimée ou mesurée (F_{estimated}) du servofrein électromécanique (58) dans le maître-cylindre de frein situé en aval, une vitesse de rotation cible (ω₀) du moteur (56) du servofrein électromécanique (58), et délivrer, en prenant en compte la vitesse de rotation cible spécifiée (ω₀) l'au moins un signal de commande (54) au moteur (56) du servofrein électromécanique (58) ;
**caractérisé en ce que**
le moyen électronique (52) est en outre conçu pour prédéterminer, en prenant en compte la différence de force (ΔF), la vitesse de rotation cible (ω₀) du moteur du servofrein électromécanique de manière à ce qu'une valeur absolue de la vitesse de rotation cible prédéterminée (ω₀) soit toujours supérieure ou égale à une valeur absolue de vitesse de rotation minimale prédéterminée (ωₘᵢₙ) non nulle.

2. Dispositif de commande (50) selon la revendication 1, le moyen électronique (52) étant conçu pour prédéterminer la valeur absolue de la vitesse de rotation cible (ω₀) comme étant égale à la valeur absolue de la vitesse de rotation minimale (ωₘᵢₙ) si une valeur absolue de la différence de force (ΔF) est inférieure à une valeur de comparaison prédéterminée (x) non nulle et pour prédéterminer la valeur absolue de la vitesse de rotation cible (ω₀) en fonction de la différence de force (ΔF) si la valeur absolue de la différence de force (ΔF) est supérieure à la valeur de comparaison prédéterminée (x).

3. Dispositif de commande (50) selon la revendication 1 ou 2, le moyen électronique (52) étant conçu pour estimer la force de moteur réelle (F_{SUP}) du moteur (56) du servofrein électromécanique (58) ou la force de freinage réelle (F_{estimated}) du servofrein électromécanique (58) dans le maître-cylindre de frein situé en aval en tenant compte d'au moins une intensité (I) d'un courant du moteur (56) du servofrein électromécanique (58) et d'un angle de rotation actuel (ϕ) d'un rotor du moteur (56) du servofrein électromécanique (58).

4. Servofrein électromécanique (58) destiné à un système de freinage d'un véhicule et comprenant un dispositif de commande (50) selon l'une des revendications précédentes.

5. Système de freinage destiné à un véhicule et comprenant :
un dispositif de commande (50) selon l'une des revendications 1 à 3 ;
le servofrein électromécanique (58) qui peut être commandé au moyen de l'au moins un signal de commande (54) du dispositif de commande (50) ; et
le maître-cylindre de frein qui est disposé en aval du servofrein électromécanique (58).

6. Procédé de fonctionnement d'un servofrein électromécanique (58) d'un système de freinage d'un véhicule, ledit procédé comprenant les étapes suivantes :
commander un moteur (56) du servofrein électromécanique (58) avec prise en compte d'au moins un signal de spécification de freinage (12) par rapport à un souhait de freinage de la part d'un conducteur du véhicule et/ou d'un automate de commande de vitesse du véhicule, avec les étapes suivantes :
prédéterminer une force de moteur cible du moteur (56) du servofrein électromécanique (58) ou une force de freinage cible (F₀) du servofrein électromécanique (58) dans un maître-cylindre, disposé en aval du servofrein électromécanique (58), du système de freinage, avec prise en compte au moins du signal de spécification de freinage (12) ; et
commander le moteur (56) du servofrein électromécanique (58) avec prise en compte d'une différence de force (ΔF) entre la force de moteur cible prédéterminée et une force de moteur réelle estimée ou mesurée (F_{SUP}) du moteur (56) ou entre la force de freinage cible prédéterminée (F₀) et une force de freinage réelle estimée ou mesurée (F_{estimated}) du servofrein électromécanique (58) dans le maître-cylindre de frein situé en aval ;
une vitesse de rotation cible (ω₀) du moteur (56) du servofrein électromécanique (58) étant prédéterminée avec prise en compte de la différence de force (ΔF), et
le moteur (56) du servofrein électromécanique (58) étant commandé avec prise en compte de la vitesse de rotation cible prédéterminée (ω₀),
**caractérisé en ce que**
la vitesse de rotation cible (ω₀) du moteur (56) du servofrein électromécanique (58) étant prédéterminée avec prise en compte de la différence de force (ΔF) de manière à ce qu'une valeur absolue de la vitesse de rotation cible prédéterminée (ω₀) soit toujours supérieure ou égale à une valeur absolue de la vitesse de rotation minimale prédéterminée (ωₘᵢₙ) non nulle.

7. Procédé selon la revendication 6, la valeur absolue de la vitesse de rotation cible (ω₀) étant prédéterminée comme étant égale à la valeur absolue de la vitesse de rotation minimale prédéterminée (ωₘᵢₙ) si une valeur absolue de la différence de force (ΔF) est inférieure à une valeur de comparaison prédéterminée (x) non nulle, et la valeur absolue de la vitesse de rotation cible (ω₀) étant prédéterminée en fonction de la différence de force (ΔF) si la valeur absolue de la différence de force (ΔF) est supérieure à la valeur de comparaison prédéterminée (x).

8. Procédé selon la revendication 6 ou 7, la force de moteur réelle (F_{SUP}) du moteur (56) du servofrein électromécanique (58) ou la force de freinage réelle (F_{estimated}) du servofrein électromécanique (58) dans le maître-cylindre de frein situé en aval étant estimée avec prise en compte au moins d'une intensité actuelle (I) d'un courant du moteur (56) du servofrein électromécanique (58) et d'un angle de rotation actuel (ϕ) d'un rotor du moteur (56) du servofrein électromécanique (58).
